(19) Europäisches Patentamt / European Patent Office / Office européen des brevets

(11) **EP 4 589 869 A1**

(12) **EUROPEAN PATENT APPLICATION**
published in accordance with Art. 153(4) EPC

(43) Date of publication:
**23.07.2025 Bulletin 2025/30**

(21) Application number: **23865176.4**

(22) Date of filing: **17.08.2023**

(51) International Patent Classification (IPC):
***H04J 99/00*** (2009.01)

(52) Cooperative Patent Classification (CPC):
**H04J 99/00**

(86) International application number:
**PCT/JP2023/029691**

(87) International publication number:
**WO 2024/057817 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022 JP 2022144865**

(71) Applicant: **National Institute of Information and
Communications Technology
Koganei-shi,
Tokyo 184-8795 (JP)**

(72) Inventors:
- **YONAGA, Kouki
  Koganei-shi, Tokyo 184-8795 (JP)**
- **TAKIZAWA, Kenichi
  Koganei-shi, Tokyo 184-8795 (JP)**

(74) Representative: **Rings, Rolf
Klingseisen, Rings & Partner
Patentanwälte
Postfach 10 15 61
80089 München (DE)**

(54) **WIRELESS SIGNAL PROCESSING SYSTEM AND WIRELESS SIGNAL PROCESSING METHOD**

(57) [Problem]

There are provided a wireless signal processing system and a wireless signal processing method achieving iterative-type MUD that enables shortening a calculation time.

[Solution]

A wireless signal processing system includes error calculation means that generates two or more patterns of estimation signals estimating waveforms of respective transmission signals transmitted from two or more second communication stations, and calculates respective estimation errors based on differences between the sum of the estimation signals included in the respective generated patterns and the reception signals, selection means that selects two or more patterns of the estimation signals based on the respective estimation errors calculated by the error calculation means, probability calculation means that calculates a probability distribution indicating a distribution of probabilities that the estimation signal is the transmission signal based on the estimation errors with respect to the two or more patterns selected by the selection means, and estimation means that estimates information included in the transmission signal based on the probability distribution calculated by the probability calculation means.

*Fig. 1*

## Description

TECHNICAL FIELD

The present invention relates to a wireless signal processing system and a wireless signal processing method.

BACKGROUND ART

Multiple connections, in particular, large-scale connections in an Uplink (UL) are one of the important functions in Beyond 5G. The technique pertaining to the IoT has been developing rapidly in recent years, and it is expected that the number of IoT devices connected to a network will reach several hundred billion by 2030. In view of this, functionality expansion of massive Machine-Type Communication (mMTC) in the UL has been desired to support IoT applications in Beyond 5G. As a promising technique to enhance this mMTC, Non-orthogonal Multiple Access (NOMA) has been attracting attention. In particular, an uplink NOMA (UL-NOMA) system exhibits high spectrum efficiency by causing a plurality of devices to share the same wireless resource block. At this time, a base station side needs Multi User Detection (MUD) of estimating information included in transmission signals transmitted by the respective devices from reception signals received. In particular, iterative multi user detection does not need a large difference in reception power between the devices, thereby being able to achieve a larger number of connected devices than a method such as Successive Interference Cancellation (SIC). In view of this, the technique of iterative multi user detection as described in Non-Patent Document 1 has been attracting attention.

Non-Patent Document 1 proposes iterative MUD using a log-likelihood ratio. The technique disclosed in Non-Patent Document 1 calculates log-likelihood ratios with respect to respective devices from reception signals using MUD blocks, and inputs them into a decoder as a priori information to correct errors. In the technique disclosed in Non-Patent Document 1, the results of this error correction are fed back to the MUD blocks again, and iterative processing is executed until transmitted data from all the devices becomes free from errors or up to the maximum number of times set in advance.

Non-Patent Document 1: H. V. Poor, "Iterative multiuser detection," IEEE Signal Processing Magazine, vol. 21, no. 1, pp. 81-88, 2004.

DISCLOSURE OF THE INVENTION

PROBLEMS TO BE SOLVED BY THE INVENTION

On the other hand, calculation efficiency of the iterative MUD is provided as $O(M^K)$ from a modulation order M and a device count K, and therefore, a MUD part that calculates a log-likelihood ratio from the reception signal for each device requires a significant calculation time.

Thus, a considerable calculation time is required when the technique disclosed in Non-Patent Document 1 is used as iterative-type MUD for large-scale connections. In view of this, it is problematic that the technique disclosed in Non-Patent Document 1 fails to implement UL-NOMA using the iterative-type MUD for large-scale connections.

The present invention has been derived to solve these problems, and an object of the present invention is to provide a wireless signal processing system and a wireless signal processing method achieving iterative-type MUD that enables shortening a calculation time.

SOLUTIONS TO THE PROBLEMS

A wireless signal processing system according to a first invention estimates information included in transmission signals transmitted from two or more second communication stations based on reception signals as the transmission signals received by a first communication station. The wireless signal processing system includes: selection means that selects two or more patterns of estimation signals estimating waveforms of the respective transmission signals transmitted from the two or more second communication stations based on estimation errors corresponding to the patterns of the estimation signals estimating the waveforms of the transmission signals and the reception signals; probability calculation means that calculates a probability distribution indicating a distribution of probabilities that the estimation signal is the transmission signal based on the estimation errors with respect to the two or more patterns selected by the selection means; and estimation means that estimates information included in the transmission signal based on the probability distribution calculated by the probability calculation means.

In the wireless signal processing system according to a second invention, which is in the first invention, the estimation means calculates a log-likelihood ratio indicating a likelihood that the estimation signal is the transmission signal based on the probability distribution calculated by the probability calculation means, and estimates information included in the transmission signal based on a code of the calculated log-likelihood ratio.

In the wireless signal processing system according to a third invention, which is in the first invention, the selection means indicates the estimation signal with a spin, calculates the estimation error using an energy function indicating the energy based on the spin, and selects two or more patterns of the estimation signals based on the calculated estimation error.

In the wireless signal processing system according to a fourth invention, which is in the first invention, the selection means calculates the estimation error using quantum annealing, and selects two or more patterns of the estimation signals based on the calculated estimation error.

A wireless signal processing system according to a fifth invention estimates information included in transmission signals transmitted from two or more second communication stations based on reception signals $r(i)$ as the transmission signals received by a first communication station. The wireless signal processing system includes: selection means that selects two or more patterns $z(i)$ of spin variables $z_k(i)$ of estimation signals $x_k(i)$ estimating waveforms of the respective transmission signals transmitted from the two or more second communication stations based on estimation errors $E_{MUD}(z(i))$ expressed by Formula (2) based on the spin variables $z_k(i)$ that express the estimation signals $x_k(i)$ estimating the waveforms of the transmission signals by Formula (1); probability calculation means that calculates a probability distribution $Pr_{Approx}[r(i)|x(i)]$ indicating a distribution of probabilities that the estimation signal $x_k$ is the transmission signal based on a set $Z_{QA}(i)$ of the two or more patterns $z(i)$ selected by the selection means and the estimation errors $E_{MUD}(z(i))$ using Formula (3); and estimation means that estimates information included in the transmission signal based on the probability distribution $Pr_{Approx}[r(i)|x(i)]$ calculated by the probability calculation means.

[Math. 1]

$$x_k(i) = \left(z_k^1(i) + j z_k^2(i)\right)/\sqrt{2}, \qquad (1)$$

Here, $x_k(i)$ indicates an i-th symbol of the estimation signal with respect to the transmission signal transmitted from a k-th second communication station, and $z^1_k$ and $z^2_k$ indicate spin variables of a real part and an imaginary part, respectively.

[Math. 2]

$$E_{MUD}(z(i)) = \sum_k H_k^1 z_k^1(i) + H_k^2 z_k^2(i)$$
$$+ \sum_{k<l} J_{k,l}^{11}\left(z_k^1(i)z_l^1(i) + z_k^2(i)z_l^2(i)\right)$$
$$+ \sum_{k<l} J_{k,l}^{12}\left(-z_k^1(i)z_l^2(i) + z_k^2(i)z_l^1(i)\right) \qquad (2)$$

$$H_k^1 = -\sqrt{2}a_k\left\{\mathrm{Re}(r(i))\mathrm{Re}(h_k) + \mathrm{Im}(r(i))\mathrm{Im}(h_k)\right\}$$
$$H_k^2 = \sqrt{2}a_k\left\{\mathrm{Re}(r(i))\mathrm{Im}(h_k) - \mathrm{Im}(r(i))\mathrm{Re}(h_k)\right\}$$
$$J_{k,l}^{11} = a_k a_l\left\{\mathrm{Re}(h_k)\mathrm{Re}(h_l) + \mathrm{Im}(h_k)\mathrm{Im}(h_l)\right\}$$
$$J_{k,l}^{12} = a_k a_l\left\{\mathrm{Re}(h_k)\mathrm{Im}(h_l) - \mathrm{Im}(h_k)\mathrm{Re}(h_l)\right\}.$$

Here, K indicates a count of the second communication stations, *k* and *l* indicate respective numbers of the second communication stations, $h_k$ indicates a communication channel coefficient between the k-th second communication station and the first communication station, $J_{ij}$ indicates an interaction between *i* and *j*, and $a_k$ and $a_l$ indicate scaling factors when modulating into a transmission signal $x_k$.

[Math. 3]

$$Pr_{Approx}\left[r(i)|x(i)\right] = \frac{e^{\frac{-1}{2\sigma_w^2} E_{MUD}(x(i))}}{\sum_{x(i)\in Z_{QA}(i)} e^{\frac{-1}{2\sigma_w^2} E_{MUD}(x(i))}} \quad (3)$$

Here, $\sigma_w$ indicates a standard deviation. In addition, x(i) = [$x_1$(i), ..., $x_k$(i), ..., $x_K$(i)], and r(i) indicates an i-th symbol of the reception signal.

A wireless signal processing method according to a sixth invention estimates information included in transmission signals transmitted from two or more second communication stations based on reception signals as the transmission signals received by a first communication station. The wireless signal processing method, executed by a computer, includes: a selecting step of selecting two or more patterns of estimation signals estimating waveforms of the respective transmission signals transmitted from the two or more second communication stations based on estimation errors corresponding to the patterns of the estimation signals estimating the waveforms of the transmission signals and the reception signals; a probability calculating step of calculating a probability distribution indicating a distribution of probabilities that the estimation signal is the transmission signal based on the estimation errors with respect to the two or more patterns of the estimation signals selected by the selecting step; and an estimating step of estimating information included in the transmission signal based on the probability distribution calculated by the probability calculating step.

EFFECTS OF THE INVENTION

According to the first invention to the sixth invention, the probability calculation means calculates the probability distribution indicating the distribution of the probabilities that the estimation signal is the transmission signal based on the estimation errors of the two or more patterns of the estimation signals selected by the selection means. This enables shortening a calculation time even when the present invention is used as iterative-type MUD for large-scale connections since only the patterns of the estimation signals determined by determination means are calculated as samples.

Especially, according to the second invention, the log-likelihood ratio indicating the likelihood that the estimation signal is the transmission signal is calculated based on the probability distribution, and the transmission signal is estimated based on the code of the calculated log-likelihood ratio. This enables determining the likelihood that the estimation signal is the transmission signal corresponding to the code of the log-likelihood ratio.

Especially, according to the third invention, the selection means calculates the estimation error using the energy function indicating the energy. This enables shortening a calculation time even when the present invention is used as iterative-type MUD for large-scale connections since only the pattern of a more appropriate estimation signal is calculated.

Especially, according to the fourth invention, the selection means calculates the estimation error using the quantum annealing. This enables selecting the pattern of an appropriate estimation signal in a shorter calculation time by the quantum annealing.

BRIEF DESCRIPTION OF THE DRAWINGS

Fig. 1 is an overall schematic diagram of a wireless signal processing system according to an embodiment.
Fig. 2 is a schematic diagram illustrating an exemplary configuration of a multi user detector according to the embodiment.
Fig. 3 illustrates a processing flow of the wireless signal processing system.
Fig. 4(a) is a graph showing a probability distribution when an estimation signal pattern is not selected.
Fig. 4(b) is a graph showing a probability distribution when the wireless signal processing system according to the embodiment is used.
Fig. 5(a) is a graph showing a first bit error rate according to the embodiment.
Fig. 5(b) is a graph showing a second bit error rate according to the embodiment.
Fig. 5(c) is a graph showing a third bit error rate according to the embodiment.
Fig. 5(d) is a graph showing a fourth bit error rate according to the embodiment.
Fig. 5(e) is a graph showing a fifth bit error rate according to the embodiment.
Fig. 5(f) is a graph showing a sixth bit error rate according to the embodiment.
Fig. 6 is graphs showing comparisons of the transition of mutual information amounts for each second communication station.

Fig. 7 is a graph showing a comparison of calculation times.

## DESCRIPTION OF PREFERRED EMBODIMENTS

The following describes a wireless signal processing system 100 to which the present invention is applied in detail with reference to the drawings.

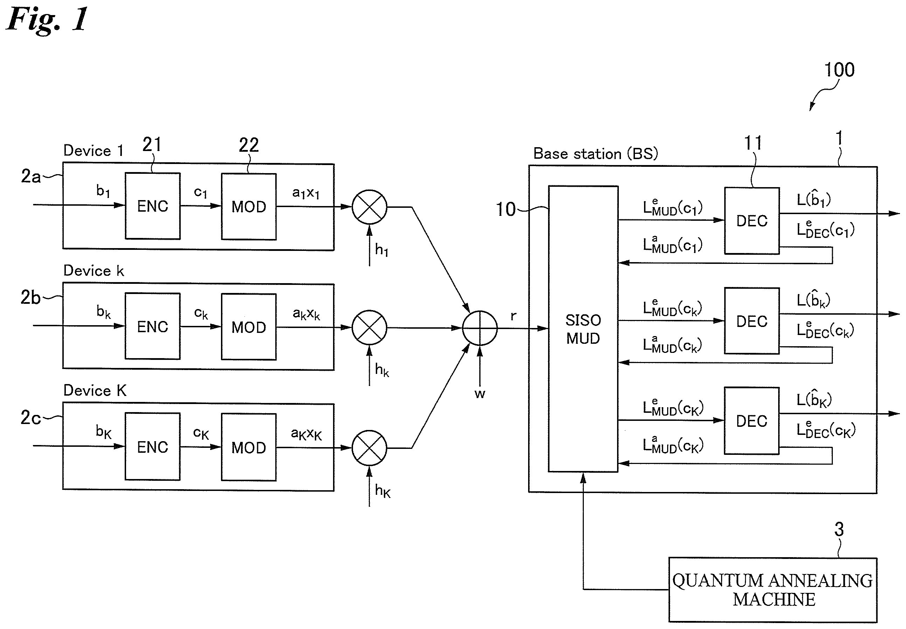

Fig. 1 is an overall schematic diagram of the wireless signal processing system 100 according to the embodiment. As illustrated in Fig. 1, the wireless signal processing system 100 includes a base station 1, and a user terminal 2 and a quantum annealing machine 3 connected to the base station 1. The wireless signal processing system 100 may include two or more user terminals (2a to 2c). The wireless signal processing system 100 estimates transmission signals transmitted from the two or more user terminals 2 based on, for example, reception signals received by the base station 1. The communication between the base station 1 and the user terminals 2 uses wireless communication, but the communication is not limited to this, and may be wired communication.

The user terminal 2 is a device (dev) that transmits a transmission signal. The user terminal 2 is configured of, for example, a wirelessly communicable terminal device used by a user, such as a laptop personal computer (PC), a mobile terminal, a smartphone, a tablet terminal, and a wearable device. The user terminal 2 includes an encoder (ENC) 21 for coding a digital signal and a modulator (MOD) 22, for example, quadrature phase shift keying (QPSK) for modulating the coded digital signal, connected to the encoder 21. While the user terminal 2 is, for example, a second communication station that transmits a transmission signal to the base station 1, the user terminal 2 may be a first communication station that receives a reception signal. The user terminal 2 may include an interleaver (not illustrated) that rearranges the order of codeword bits between the encoder 21 and the modulator 22.

The quantum annealing machine 3 is a computer that uses the principle of quantum annealing to select patterns of estimation signals indicating estimations of waveforms of the transmission signals transmitted from the respective second communication stations from the reception signals received by the first communication station. The quantum annealing is a method of obtaining an optimal solution or an approximate solution to a combinatorial optimization problem using quantum fluctuations. The quantum annealing may, for example, have an annealing period of 20 $\mu$s or less. The quantum annealing machine 3 may be included in the base station 1. The quantum annealing machine 3 is not limited to the computer using the principle of quantum annealing, and may be a computer having convenient calculation means. The quantum annealing machine 3 may be, for example, designed to solve an energy function with respect to an ising model in Formula (4).

[Math. 4]

$$E_{\mathrm{Ising}}(z) = \sum_{i,j} J_{i,j} z_i z_j + \sum_i h_i z_i, \quad (4)$$

Here, $J_{ij}$ indicates an interaction between $i$ and $j$, $z_i = \{+1, -1\}$ indicates a spin variable, and $z$ indicates a vector of a spin. The quantum annealing machine 3 transmits, to the base station 1, samples of the patterns of the estimation signals transmitted from the respective second communication stations calculated based on the reception signals transmitted from the base station 1. Here, the sample is, for example, an example of a solution calculated by the quantum annealing machine 3.

The base station 1 is a communication station (Base station: BS) that plays a role of a wireless access point for a plurality of the user terminals 2, and plays a role of an interface for communication lines including the Internet and the like. That is, the base station 1 takes a role of relay means for enabling the user terminals 2 to transmit and receive data with the communication lines including the Internet and the like via the base station 1. The base station 1 controls wireless signal processing. For the base station 1, for example, an electronic device, such as a personal computer (PC), to control the wireless signal processing is used, and in addition, for example, an electronic device, such as a smartphone, a tablet terminal, a wearable device, and an IoT (Internet of Things) device, a single board computer, and the like may be used. The base station 1 may be the first communication station that receives the reception signal or may be the second communication station that transmits the transmission signal.

The base station 1 includes a multi user detector (MUD) 10 and a decoder (DEC) 11 connected to the multi user detector 10 to decode data. The base station 1 may include a plurality of the decoders 11 connected to the multi user detector 10. The multi user detector 10 estimates information included in the transmission signals transmitted from the respective second communication stations. The multi user detector 10 may be, for example, a Soft-input Soft-output (SISO) multi user detector. When the user terminal 2 includes the interleaver (not illustrated) that rearranges the order of codeword bits between the encoder 21 and the modulator 22, an output from the multi user detector 10 is input to the decoder 11 via a de-interleaver (not illustrated), and an output from the decoder 11 is input to the multi user detector 10 via the interleaver (not illustrated).

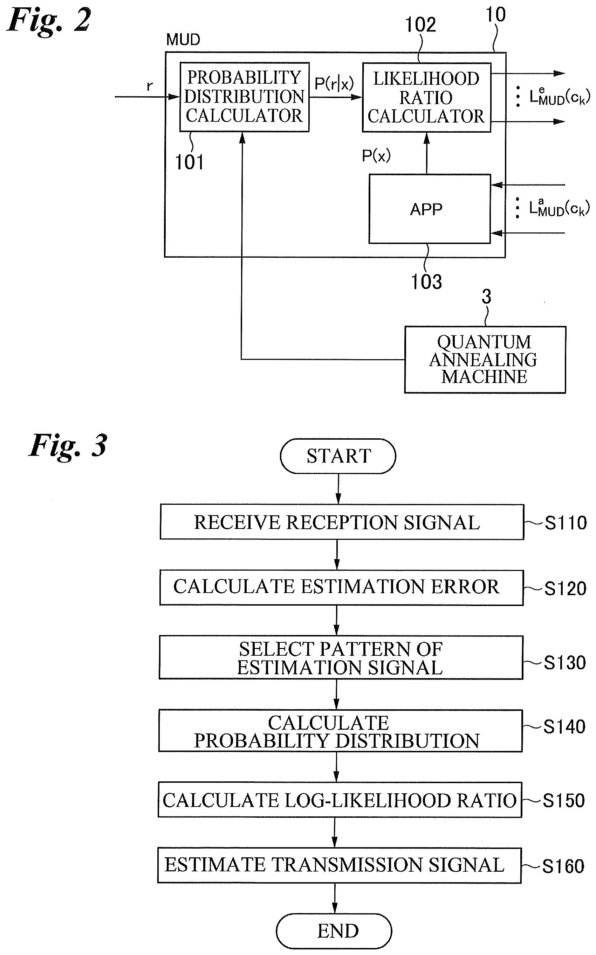

Fig. 2 is a schematic diagram illustrating an exemplary configuration of the multi user detector 10 according to the embodiment. The multi user detector 10 includes a probability distribution calculator 101, a likelihood ratio calculator 102 connected to the probability distribution calculator 101 and the decoder 11, and an a priori probability calculator (APP) 103 connected to the likelihood ratio calculator 102 and the decoder 11.

The probability distribution calculator 101 calculates a probability distribution indicating a distribution of probabilities that the estimation signal indicating the estimation of the waveform of the transmission signal is the transmission signal based on, for example, the reception signal transmitted from the second communication station and received by the first communication station. The probability distribution calculator 101 generates, for example, two or more patterns of the estimation signals estimating the waveforms of the respective transmission signals transmitted from two or more second communication stations, and calculates respective estimation errors based on differences between the sum of the estimation signals included in the respective generated patterns and the reception signals. The probability distribution calculator 101 selects two or more patterns of the estimation signals based on the respective calculated estimation errors. The probability distribution calculator 101 calculates a probability distribution based on the estimation errors of the two or more selected patterns of the estimation signals. The probability distribution calculator 101 may be connected to the quantum annealing machine 3. In such a case, the probability distribution calculator 101 may select the patterns of the estimation signals based on the estimation errors using the quantum annealing machine 3.

The likelihood ratio calculator 102 calculates a log-likelihood ratio based on the probability distribution calculated by the probability distribution calculator 101. The likelihood ratio calculator 102 transmits the calculated log-likelihood ratio to the decoder 11.

The a priori probability calculator (APP) 103 calculates an a priori probability P(x) to additionally calculate a log-likelihood ratio based on the log-likelihood ratio transmitted from the decoder 11, and transmits the calculated a priori probability P(x) to the likelihood ratio calculator 102.

Next, an operation of processing by the wireless signal processing system 100 will be described with reference to Fig. 3. First, the second communication station transmits a transmission signal at Step S110. The first communication station receives reception signals based on the transmission signals transmitted from two or more second communication stations. The transmission signals are signals transmitted from the second communication stations. The transmission signal has information with bits of a length D of $\{b_k(0), ..., b_k(D-1)\}$ when a bit count of the information included in the transmission signal is D. The reception signals are signals that are the transmission signals transmitted from the two or more second communication stations and received by the first communication station. The reception signals are signals with interference of the transmission signals caused by a data collision and the like of the transmission signals when the reception signals are received by the first communication station. Here, while the first communication station may be, for example, the base station 1, the first communication station is not limited to this, and may be any communication station. While the second communication station may be, for example, the user terminal 2, the second communication station is not limited to this, and may be any communication station.

At Step S110, the encoder 21 of the k-th second communication station assigns a Cyclic Redundancy Check (CRC) code having a certain bit count to a bit string $b_k$ of the information of the transmission signal, and encodes the bit string $b_k$ into an error correcting codeword bit string $c_k = \{c_k(0), ..., c_k(N-1)\}$ having a length of N bits in order to perform error detection at Step S150 described later. Next, at Step S110, the modulator 22 modulates the error correcting codeword bit string $c_k$ into a transmission signal $a_k x_k$. The second communication station transmits this transmission signal $a_k x_k$ to the first communication station, and the first communication station receives the transmission signals transmitted from the plurality of second communication stations as the reception signals. At Step S110, the transmission signal transmitted from the k-th second communication station is amplified by a factor of a communication channel coefficient $h_k$ that indicates radio wave propagation characteristics between the k-th second communication station and the first communication station, and signals with which the respective amplified transmission signals interfere become the reception signals and are received by the first communication station. Here, *k* indicates a number of the second communication station.

This reception signal may be calculated by a formula expressed by Formula (5).

[Math. 5]

$$r(i) = \sum_{k=1}^{K} h_k a_k x_k(i - \delta_k) + w(i). \qquad (5)$$

Here, $a_k$ indicates a scaling factor when the error correcting codeword bit string $c_k$ is modulated into a transmission signal $x_k$, and K indicates a count of the second communication stations. $\delta_k$ indicates a propagation delay between the second communication station and the first communication station. $w(i)$ is additive white Gaussian noise. $r(i)$ indicates a reception signal. By using the communication channel coefficient $h_k$ and the propagation delay $\delta_k$ obtained from an estimation of a reception signal vector $r = \{r(0), ..., r(L-1)\}$ obtained by vectorizing this reception signal in a symbol unit, interference between the second communication stations is suppressed and removed, the transmission signal is estimated, and thus, the bit string $b_k$ (k = 1, ..., K) of the information of the transmission signal transmitted from each of the second communication stations can be decoded. Here, L indicates a count of samples per symbol.

Next, at Step S120, the probability distribution calculator 101 selects two or more patterns of the estimation signals estimating the waveforms of the respective transmission signals transmitted from two or more second communication stations based on the estimation errors corresponding to the patterns of the estimation signals estimating the waveforms of the transmission signals and the reception signals. The estimation signals are signals estimating the waveforms of the transmission signals transmitted by the respective second communication stations. The probability distribution calculator 101 may estimate the estimation signal using any method. The samples of the estimation signals are samples of the estimation signals with respect to the respective transmission signals transmitted from two or more second communication stations. The estimation error may be, for example, an error based on a difference between the sum of each of the estimation signals included in the samples of the estimation signals multiplied by $h_k$ and the reception signal. The estimation error may be expressed by, for example, Formula (6).

[Math. 6]

$$ E(\boldsymbol{x}) = \left\| r - \sum_{k=1}^{K} h_k x_k \right\|^2 \qquad (6) $$

Here, $E(x)$ indicates an estimation error, and x indicates a sample of the estimation signal $x_k$. At this time, $x = \{x_1, x_2, ..., x_k, ..., x_K\}$. In addition, $x_k$ indicates an estimation signal indicating an estimation of a waveform of a transmission signal transmitted from the k-th second communication station. K indicates a count of the second communication stations, **$k$** indicates a number of the second communication station, and $h_k$ indicates a communication channel coefficient between the k-th second communication station and the first communication station.

At Step S120, the probability distribution calculator 101 selects two or more patterns of the estimation signals based on the estimation errors. The probability distribution calculator 101 may, for example, select the patterns of the estimation signals with the smallest estimation errors or two or more patterns that are approximate solutions when the estimation errors are minimum. The probability distribution calculator 101 may, for example, select two or more patterns of the estimation signals with as small estimation errors as possible. At Step S120, selecting two or more patterns of the estimation signals allows the generation of the patterns of a plurality of the estimation signals as the samples, thereby enabling an estimation of the transmission signal with higher accuracy. The multi user detector 10 may select patterns with an estimation error equal to or less than a threshold.

At Step S120, the multi user detector 10 may select the patterns of the estimation signals estimated by the quantum annealing machine 3 based on the reception signals received at Step S110. In such a case, for example, when QPSK modulation is used, the estimation signal is calculated by Formula (1) using a spin as a variable.

[Math. 1]

$$ x_k(i) = \left( z_k^1(i) + j z_k^2(i) \right) / \sqrt{2}, \qquad (1) $$

Here, $x_k(i)$ indicates an i-th symbol of the estimation signal with respect to the transmission signal transmitted from the k-th second communication station. $z_k^1$ and $z_k^2$ indicate spin variables of a real part and an imaginary part, respectively.

From Formula (1) and Formula (6) described above, the estimation error can be expressed by Formula (2) of an energy function indicating energy based on the spin.

[Math. 2]

$$E_{\mathrm{MUD}}(z(i)) = \sum_{k} H_k^1 z_k^1(i) + H_k^2 z_k^2(i)$$

$$+ \sum_{k<l} J_{k,l}^{11} \left( z_k^1(i) z_l^1(i) + z_k^2(i) z_l^2(i) \right)$$

$$+ \sum_{k<l} J_{k,l}^{12} \left( -z_k^1(i) z_l^2(i) + z_k^2(i) z_l^1(i) \right) \qquad (2)$$

$$H_k^1 = -\sqrt{2} a_k \left\{ \mathrm{Re}(r(i)) \mathrm{Re}(h_k) + \mathrm{Im}(r(i)) \mathrm{Im}(h_k) \right\}$$

$$H_k^2 = \sqrt{2} a_k \left\{ \mathrm{Re}(r(i)) \mathrm{Im}(h_k) - \mathrm{Im}(r(i)) \mathrm{Re}(h_k) \right\}$$

$$J_{k,l}^{11} = a_k a_l \left\{ \mathrm{Re}(h_k) \mathrm{Re}(h_l) + \mathrm{Im}(h_k) \mathrm{Im}(h_l) \right\}$$

$$J_{k,l}^{12} = a_k a_l \left\{ \mathrm{Re}(h_k) \mathrm{Im}(h_l) - \mathrm{Im}(h_k) \mathrm{Re}(h_l) \right\}.$$

Here, $E_{\mathrm{MUD}}(z(i))$ indicates an energy function in an ising model, and r(i) indicates an i-th symbol of the reception signal. *k* and *l* indicate respective numbers of the second communication stations. A sample z(i) is a pattern of a combination of the spins, and, for example, is {+1, -1, -1,,,}. The quantum annealing machine 3 selects a solution such that the energy function decreases. The quantum annealing machine 3 may select two or more patterns of the estimation signals that are approximate solutions of Formula (2). Thus, two or more types of solutions can be generated as samples in a short calculation time.

Next, at Step S130, the probability distribution calculator 101 calculates a probability distribution indicating the distribution of the probabilities that the estimation signal is the transmission signal based on the estimation error for every two or more samples of the estimation signals selected at Step S120. The probability distribution may be a distribution of probabilities that, when the estimation signals of the samples selected at Step S120 are the transmission signals, the reception signals are the reception signals received at Step S110. The probability distribution is obtained as a two-dimensional Gaussian distribution with a product of the communication channel coefficient $h_k$ and the estimation signal $x_k$ (i) as an average value using a standard deviation $\sigma_w$ of the additive white Gaussian noise from the assumption that the communication channel coefficient $h_k$ is fixed in a symbol. At Step S130, for example, the probability distribution calculator 101 calculates a probability distribution using Formula (7) based on the estimation error for every two or more samples of the estimation signals selected at Step S120. [Math. 7]

$$\Pr[r|x] = \frac{e^{-\frac{1}{2\sigma_w^2} E(x)}}{\sum_{x \in X} e^{-\frac{1}{2\sigma_w^2} E(x)}} \qquad (7)$$

Here, Pr[r|x] indicates a probability distribution, and $\sigma_w$ indicates a standard deviation. *x* is a pattern of the estimation signal, and $x = [x_1, ..., x_k, ..., x_K]$. *r* indicates a reception signal. X indicates a set of the pattern x. E(x) indicates an estimation error.

For example, the probability distribution calculator 101 may calculate the probability distribution expressed by Formula (3) with respect to the i-th reception signal r(i) based on a set $Z_{QA}(i)$ of the samples with respect to the patterns of the combinations of the spins obtained by the quantum annealing machine 3 and an estimation error $E_{\mathrm{MUD}}(z(i))$ calculated at Step S130. [Math. 3]

$$\mathrm{Pr}_{\mathrm{Approx}}\left[r(i)\,|\,x(i)\right] = \frac{e^{-\frac{1}{2\sigma_w^2}E_{\mathrm{MUD}}(z(i))}}{\sum_{z(i)\in Z_{QA}(i)} e^{-\frac{1}{2\sigma_w^2}E_{\mathrm{MUD}}(z(i))}} \qquad (3)$$

Here, $\mathrm{Pr}_{\mathrm{Approx}}[r(i)|x(i)]$ indicates a probability distribution, and $\sigma_w$ indicates a standard deviation. $x(i)$ indicates an estimation signal with respect to the transmission signal from the i-th second communication station in a vector form, and $x(i) = [x_1(i), ..., x_k(i), ..., x_K(i)]$. $r(i)$ indicates an i-th symbol of the reception signal.

At Step S130, when the sample of the transmission signal is selected using the quantum annealing machine 3, a probability distribution may be calculated using Formula (8).
[Math. 8]

$$\mathrm{PrQA}\left[r(i)\,|\,z(i)\right] = \frac{N_{\mathrm{samp}}(z(i))}{\text{Total number of samples } N_{\mathrm{total}}} \qquad (8)$$

Here, $\mathrm{Pr}_{\mathrm{QA}}[r(i)|x(i)]$ indicates a probability distribution, and $N_{\mathrm{total}}$ indicates a count of all the solutions calculated using Formula (2) at Step S130. $N_{\mathrm{samp}}(z(i))$ indicates a count of appearances of samples. The count of appearances of samples indicates the number of times the pattern of the transmission signal selected at Step S120 has appeared as a solution when the solution is calculated using Formula (2) at Step S130.

Next, at Step S140, the likelihood ratio calculator 102 calculates a log-likelihood ratio that indicates a likelihood that the estimation signal is the transmission signal based on the probability distribution calculated at Step S130. At Step S140, the multi user detector 10 may calculate a log-likelihood ratio using Formula (9).
[Math. 9]

$$L(c_k(n))_{\mathrm{MUD}} = \log\frac{\mathrm{Pr}\left[c_k(n) = 1\,|\,r\right]}{\mathrm{Pr}\left[c_k(n) = 0\,|\,r\right]}$$

$$= \log\frac{\mathrm{Pr}\left[r\,|\,c_k(n) = 1\right]}{\mathrm{Pr}\left[r\,|\,c_k(n) = 0\right]} + \log\frac{\mathrm{Pr}\left[c_k(n) = 1\right]}{\mathrm{Pr}\left[c_k(n) = 0\right]} \qquad (9)$$

Here, $L(c_k(n))_{\mathrm{MUD}}$ indicates a log-likelihood ratio, and $\mathrm{Pr}[c_k(n)=1|r]$ indicates a probability that a codeword bit $c_k(n)$ is 1 when the reception signal vector r is received. $\mathrm{Pr}[c_k(n)=0|r]$ indicates a probability that the codeword bit $c_k(n)$ is 0 when the reception signal vector *r* is received.

The first term on the right-hand side of Formula (9) is extrinsic information, and is $L(c_k(n))^e_{\mathrm{MUD}}$. The second term on the right-hand side of Formula (9) is a priori information fed back from the decoder 11, and is $L(c_k(n))^a_{\mathrm{MUD}}$. In the initial multi user detection process, $L(c_k)^e_{\mathrm{DEC}}$ is all zero. A log-likelihood ratio $L(c_k)_{\mathrm{MUD}}$ can be calculated by Formula (10).
[Math. 10]

$$L(c_k(n))_{\mathrm{MUD}} = \log\frac{\sum_{x\in X^1_{k,n}} \mathrm{Pr}\left[r\,|\,x\right]\cdot\mathrm{Pr}\left[x\right]}{\sum_{x\in X^0_{k,n}} \mathrm{Pr}\left[r\,|\,x\right]\cdot\mathrm{Pr}\left[x\right]} \qquad (10)$$

Here, $X^1_{k,n}$ and $X^0_{k,n}$ indicate subsets of X conditional on $c_k(n)$ being 1 or 0 among the sets X of x when the pattern of the estimation signal $x_k$ is described as a vector x. $\mathrm{Pr}[x]$ is obtained from the a priori information $L(c_k)^a_{\mathrm{MUD}}$ fed back from the decoder 11. The extrinsic information is obtained by subtracting $L(c_k)^a_{\mathrm{MUD}}$ from $L(c_k)_{\mathrm{MUD}}$ obtained with Formula (9), and this is passed to the decoder 11 as the a priori information $L(c_k)^a_{\mathrm{DEC}}$.

Next, at Step S150, the multi user detector 10 estimates the information included in the transmission signal based on the log-likelihood ratio calculated at Step S140. At Step S150, the multi user detector 10 estimates the information included in the transmission signal based on, for example, the code of the log-likelihood ratio. In such a case, for example, error detection by a CRC may be performed on the code assigned at Step S110 with respect to the bit string $b_k$ output from the decoder 11, and the estimation signal of the bit string $b_k$ determined to be error-free may be estimated as the transmission signal. With respect to the transmission bit string $b_k$ of the estimation signal determined to be error-free, remapping is performed using the communication channel coefficient $h_k$ and a propagation delay time $\delta_k$, and a reception signal replica $r'_k = h_k.x_k(i-\delta_k)$ is generated. Interference between the second communication stations can be suppressed and removed by subtracting this reception signal replica $r'_k$ from the reception signal vector $\boldsymbol{r}$. At Step S150, when it is determined that there is an error, the decoder 11 feeds the a priori information $L(c_k)^a{}_{MUD}$ back to the a priori probability calculator (APP) 103 of the multi user detector 10, and performs likelihood exchange processing that calculates a log-likelihood ratio at Step S140 again. The likelihood exchange processing between the multi user detector 10 and the decoder 11 is repeated until it is determined that there is no error with respect to the bit strings $b_k$ of all the estimation signals or up to the predetermined upper limit count of likelihood exchanges. By performing each step described above, the operation of the wireless signal processing system 100 ends. Thus, even when the present invention is used as iterative-type MUD for large-scale connections, the calculation time can be shortened.

Next, an experimental result of estimating transmission signals using the wireless signal processing system 100 according to the embodiment will be described.

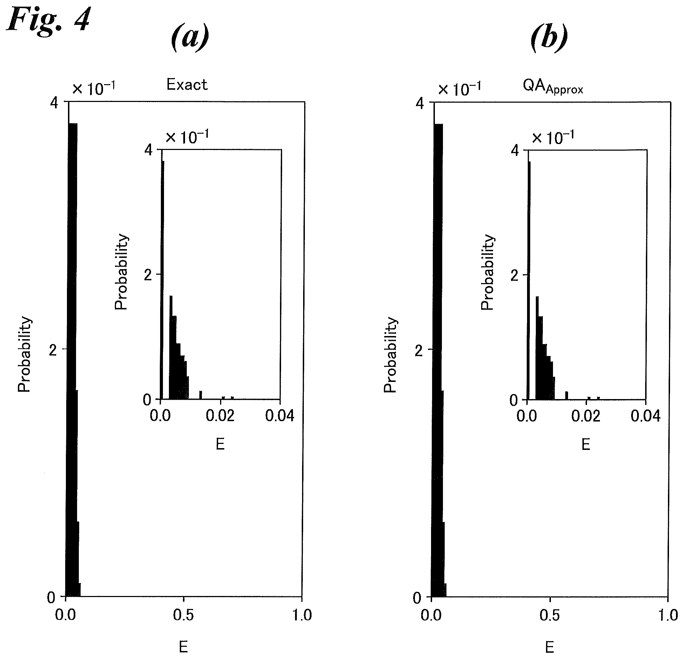

Fig. 4(a) is a graph showing a probability distribution when a pattern of an estimation signal is not selected. Fig. 4(b) is a graph showing a probability distribution when the wireless signal processing system according to the embodiment is used. The vertical axes in Fig. 4(a) and Fig. 4(b) indicate probabilities, and the horizontal axes indicate estimation errors. The probability distribution when the pattern of the estimation signal is not selected shown in Fig. 4(a) is, for example, a probability distribution calculated based on all the patterns the estimation signals can take without performing Step S120 according to the embodiment. There is no difference in comparison between the probability distributions as illustrated in Fig. 4(a) and Fig. 4(b), and therefore, it can be considered that there is no difference in accuracy between the probability distribution when the wireless signal processing system 100 according to the embodiment is used and the probability distribution calculated based on all the patterns that can be taken by the estimation signals.

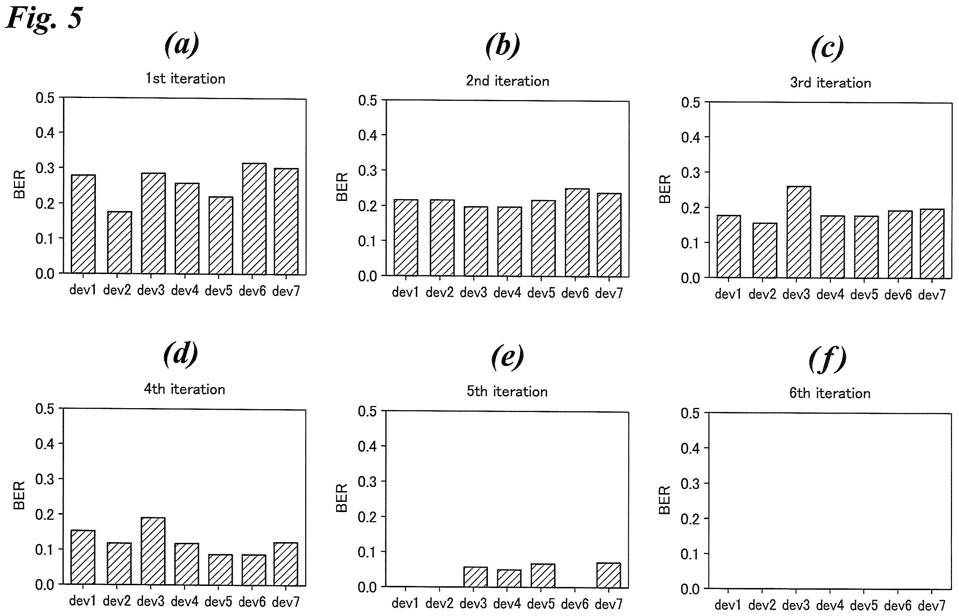

Fig. 5(a) is a graph showing a first bit error rate according to the embodiment. Fig. 5(b) is a graph showing a second bit error rate according to the embodiment. Fig. 5(c) is a graph showing a third bit error rate according to the embodiment. Fig. 5(d) is a graph showing a fourth bit error rate according to the embodiment. Fig. 5(e) is a graph showing a fifth bit error rate according to the embodiment. Fig. 5(f) is a graph showing a sixth bit error rate according to the embodiment. Each bar chart in Fig. 5(a), Fig. 5(b), Fig. 5(c), Fig. 5(d), Fig. 5(e), and Fig. 5(f) indicates a height of an error rate for each second communication station. Fig. 5(a), Fig. 5(b), Fig. 5(c), Fig. 5(d), Fig. 5(e), and Fig. 5(f) each show a bit error rate per count of the likelihood exchange processing at Step S140 and Step S150. As illustrated in Fig. 5(a), Fig. 5(b), Fig. 5(c), Fig. 5(d), Fig. 5(e), and Fig. 5(f), the bit error rates are reduced each time the likelihood exchange processing is repeated, and all the second communication stations can detect the information included in the transmission signal accurately by performing the likelihood exchange processing six times.

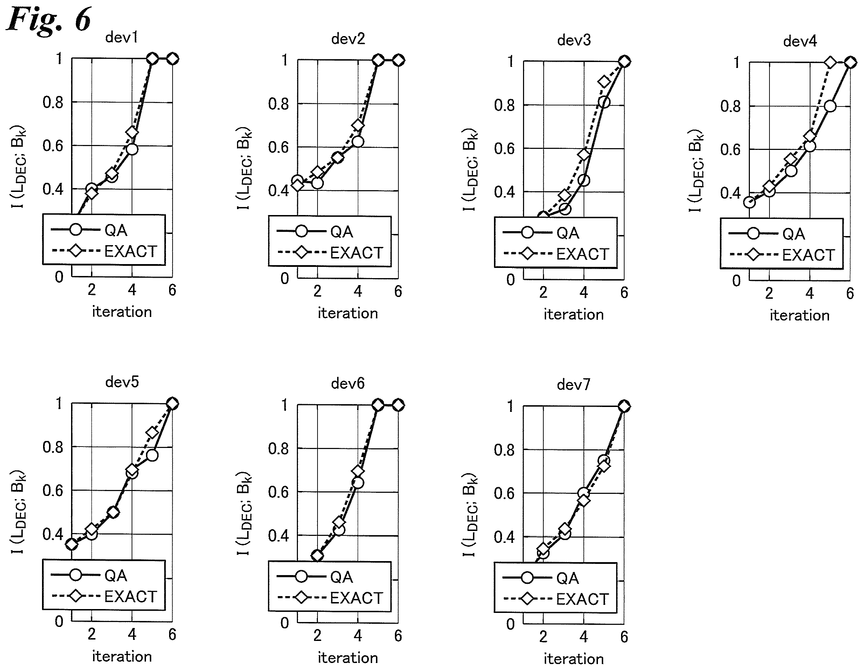

Fig. 6 is graphs showing comparisons of the transition of mutual information amounts for each second communication station. The vertical axes in Fig. 6 indicate mutual information amounts, and the horizontal axes indicate the number of times of the likelihood exchange processing. In Fig. 6, QA indicates the transition of the mutual information amount when the embodiment is used, and EXACT indicates the transition of the mutual information amount calculated based on the probability distribution calculated based on the patterns of all the estimation signals estimated without performing Step S120 according to the embodiment. As illustrated in Fig. 6, it can be considered that there is no difference in accuracy between when the wireless signal processing system 100 according to the embodiment is used and when the calculations are made based on the patterns of all the estimation signals estimated.

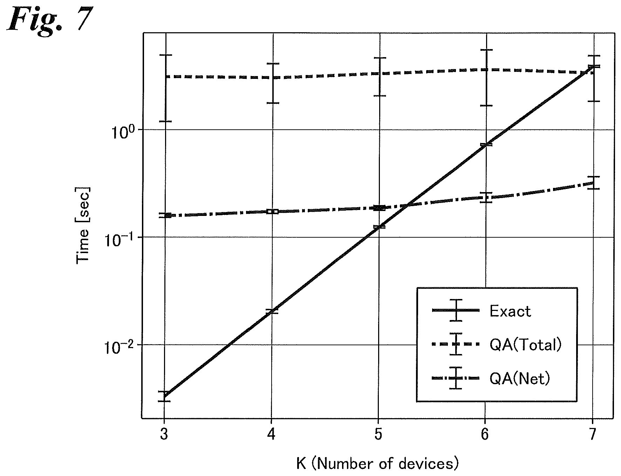

Fig. 7 is a graph showing a comparison of calculation times. The vertical axis in Fig. 7 indicates the calculation time, and the horizontal axis indicates the count of the second communication stations. QA (Net) indicates the calculation time when the embodiment is used, and QA (Total) indicates the calculation time considering the patterns of all the estimation signals estimated without performing Step S120 according to the embodiment. As illustrated in Fig. 7, the calculation time when the wireless signal processing system 100 of the embodiment is used can be shortened to approximately 1/10 of the calculation time when the patterns of all the estimation signals estimated are considered. This shows that the calculation time can be shortened without degrading accuracy even when the present invention is used as iterative-type MUD for large-scale connections.

While the embodiment of the present invention has been described, this embodiment has been presented by way of example, and is not intended to limit the scope of the invention. The novel embodiment described herein can be embodied in a variety of other configurations, and various omissions, substitutions, and changes can be made without departing from the gist of the invention. The embodiment and the modifications thereof are within the scope and the gist of the invention and within the scope of the invention described in the claims and their equivalents.

DESCRIPTION OF REFERENCE SIGNS

1:          Base station
2:          User terminal
3:          Quantum annealing machine
10:         Multi user detector
11:         Decoder
21:         Encoder
22:         Modulator
100:        Wireless signal processing system
101:        Probability distribution calculator
102:        Likelihood ratio calculator
103:        A priori probability calculator

**Claims**

1.  A wireless signal processing system that estimates information included in transmission signals transmitted from two or more second communication stations based on reception signals as the transmission signals received by a first communication station, the wireless signal processing system comprising:

    selection means that selects two or more patterns of estimation signals estimating waveforms of the respective transmission signals transmitted from the two or more second communication stations based on estimation errors corresponding to the patterns of the estimation signals estimating the waveforms of the transmission signals and the reception signals;
    probability calculation means that calculates a probability distribution indicating a distribution of probabilities that the estimation signal is the transmission signal based on the estimation errors with respect to the two or more patterns selected by the selection means; and
    estimation means that estimates information included in the transmission signal based on the probability distribution calculated by the probability calculation means.

2.  The wireless signal processing system according to claim 1, wherein
    the estimation means calculates a log-likelihood ratio indicating a likelihood that the estimation signal is the transmission signal based on the probability distribution calculated by the probability calculation means, and estimates information included in the transmission signal based on a code of the calculated log-likelihood ratio.

3.  The wireless signal processing system according to claim 1, wherein
    the selection means indicates the estimation signal with a spin, calculates the estimation error using an energy function indicating the energy based on the spin, and selects two or more patterns of the estimation signals based on the calculated estimation error.

4.  The wireless signal processing system according to claim 1, wherein
    the selection means calculates the estimation error using quantum annealing, and selects two or more patterns of the estimation signals based on the calculated estimation error.

5.  A wireless signal processing system that estimates information included in transmission signals transmitted from two or more second communication stations based on reception signals $r(i)$ as the transmission signals received by a first communication station, the wireless signal processing system comprising:

    selection means that selects two or more patterns $z(i)$ of spin variables $z_k(i)$ of estimation signals $x_k(i)$ estimating waveforms of the respective transmission signals transmitted from the two or more second communication stations based on estimation errors $E_{MUD}(z(i))$ expressed by Formula (2) based on the spin variables $z_k(i)$ that express the estimation signals $x_k(i)$ estimating the waveforms of the transmission signals by Formula (1);
    probability calculation means that calculates a probability distribution $Pr_{Approx}[r(i)|x(i)]$ indicating a distribution of probabilities that the estimation signal $x_k$ is the transmission signal based on a set $Z_{QA}(i)$ of the two or more patterns $z(i)$ selected by the selection means and the estimation errors $E_{MUD}(z(i))$ using Formula (3); and
    estimation means that estimates information included in the transmission signal based on the probability distribution $Pr_{Approx}[r(i)|x(i)]$ calculated by the probability calculation means.
[Math. 1]

$$x_k(i) = \left( z_k^1(i) + j z_k^2(i) \right) / \sqrt{2}, \qquad (1)$$

Here, $x_k(i)$ indicates an i-th symbol of the estimation signal with respect to the transmission signal transmitted from a k-th second communication station, and $z^1_k$ and $z^2_k$ indicate spin variables of a real part and an imaginary part, respectively.
[Math. 2]

$$E_{MUD}(z(i)) = \sum_k H_k^1 z_k^1(i) + H_k^2 z_k^2(i)$$
$$+ \sum_{k<l} J_{k,l}^{11} \left( z_k^1(i) z_l^1(i) + z_k^2(i) z_l^2(i) \right)$$
$$+ \sum_{k<l} J_{k,l}^{12} \left( -z_k^1(i) z_l^2(i) + z_k^2(i) z_l^1(i) \right) \qquad (2)$$

$$H_k^1 = -\sqrt{2} a_k \left\{ \mathrm{Re}(r(i))\mathrm{Re}(h_k) + \mathrm{Im}(r(i))\mathrm{Im}(h_k) \right\}$$
$$H_k^2 = \sqrt{2} a_k \left\{ \mathrm{Re}(r(i))\mathrm{Im}(h_k) - \mathrm{Im}(r(i))\mathrm{Re}(h_k) \right\}$$
$$J_{k,l}^{11} = a_k a_l \left\{ \mathrm{Re}(h_k)\mathrm{Re}(h_l) + \mathrm{Im}(h_k)\mathrm{Im}(h_l) \right\}$$
$$J_{k,l}^{12} = a_k a_l \left\{ \mathrm{Re}(h_k)\mathrm{Im}(h_l) - \mathrm{Im}(h_k)\mathrm{Re}(h_l) \right\}.$$

Here, $K$ indicates a count of the second communication stations, $k$ and $l$ indicate respective numbers of the second communication stations, $h_k$ indicates a communication channel coefficient between the k-th second communication station and the first communication station, $J_{ij}$ indicates an interaction between $i$ and $j$, and $a_k$ and $a_l$ indicate scaling factors when modulating into a transmission signal $x_k$.
[Math. 3]

$$Pr_{Approx}[r(i)|x(i)] = \frac{e^{-\frac{1}{2\sigma_w^2} E_{MUD}(z(i))}}{\sum_{z(i) \in Z_{QA}(i)} e^{-\frac{1}{2\sigma_w^2} E_{MUD}(z(i))}} \qquad (3)$$

Here, $\sigma_w$ indicates a standard deviation. In addition, $x(i) = [x_i(i), ..., x_k(i), ..., x_K(i)]$, and $r(i)$ indicates an i-th symbol of the reception signal.

6. A wireless signal processing method that estimates information included in transmission signals transmitted from two or more second communication stations based on reception signals as the transmission signals received by a first communication station, the wireless signal processing method, executed by a computer, comprising:

a selecting step of selecting two or more patterns of estimation signals estimating waveforms of the respective transmission signals transmitted from the two or more second communication stations based on estimation errors corresponding to the patterns of the estimation signals estimating the waveforms of the transmission signals and the reception signals;

a probability calculating step of calculating a probability distribution indicating a distribution of probabilities that the estimation signal is the transmission signal based on the estimation errors with respect to the two or more patterns of the estimation signals selected by the selecting step; and

an estimating step of estimating information included in the transmission signal based on the probability distribution calculated by the probability calculating step.

*Fig. 1*

*Fig. 2*

*Fig. 3*

Fig. 4

(a)

(b)

# Fig. 5

## (a)

1st iteration

## (b)

2nd iteration

## (c)

3rd iteration

## (d)

4th iteration

## (e)

5th iteration

## (f)

6th iteration

*Fig. 6*

**Fig. 7**

## INTERNATIONAL SEARCH REPORT

| International application No. |
|---|
| **PCT/JP2023/029691** |

**A.    CLASSIFICATION OF SUBJECT MATTER**

*H04J 99/00*(2009.01)i
FI:    H04J99/00 100

According to International Patent Classification (IPC) or to both national classification and IPC

**B.    FIELDS SEARCHED**

Minimum documentation searched (classification system followed by classification symbols)

H04J99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C.    DOCUMENTS CONSIDERED TO BE RELEVANT**

| Category* | Citation of document, with indication, where appropriate, of the relevant passages | Relevant to claim No. |
|---|---|---|
| A | BOTSINIS, Panagiotis et al. Joint Quantum-Assisted Channel Estimation and Data Detection. IEEE Access (vol. 4), IEEE, 18 July 2016, pp. 7658-7681<br>entire text, all drawings | 1-6 |
| A | JP 2018-121215 A (NATIONAL INSTITUTE OF INFORMATION & COMMUNICATIONS TECHNOLOGY) 02 August 2018 (2018-08-02)<br>entire text, all drawings<br>(Family: none) | 1-6 |
| P, A | JP 2023-003300 A (NIPPON TELEGRAPH AND TELEPHONE CORP.) 11 January 2023 (2023-01-11)<br>paragraph [0016]<br>(Family: none) | 1-6 |

☐ Further documents are listed in the continuation of Box C.    ☐ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **11 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. V. POOR**. Iterative multiuser detection. *IEEE Signal Processing Magazine*, 2004, vol. 21 (1), 81-88